# EUROPÄISCHE PATENTANMELDUNG

(11) **EP 4 707 138 A1**
(43) Veröffentlichungstag der Anmeldung: **11.03.2026**
(21) Anmeldenummer: 25199687.2
(22) Anmeldetag: 02.09.2025
(51) Int. Cl.: B62D 53/08

(54) **KÖNIGSZAPFENANORDNUNG, SATTELAUFLIEGER, KÖNIGSZAPFEN UND VERFAHREN ZUM ERFASSEN EINES FAHRZUSTANDS EINES SATTELAUFLIEGERS**

(30) Priorität: 06.09.2024 DE 102024125638
(71) Anmelder: JOST-Werke Deutschland GmbH, 63263 Neu-Isenburg (DE)
(72) Erfinder: Hansen, Paul, 63263 Neu-Isenburg (DE); Algüera Gallego, José Manuel, 63739 Aschaffenburg (DE); Gitzen, Stephan, 64560 Riedstadt (DE); Saupe, Swen, 55126 Mainz (DE)
(74) Vertreter: WSL Patentanwälte Partnerschaft mbB

(57) **Zusammenfassung**

Die vorliegende Erfindung betrifft eine Königszapfenanordnung, einen Sattelauflieger, einen Königszapfen und ein Verfahren zum Erfassen eines Fahrzustands eines Sattelaufliegers

## Beschreibung

Die vorliegende Erfindung betrifft eine Königszapfenanordnung, einen Sattelauflieger und ein Verfahren zum Erfassen eines Fahrzustands eines Sattelaufliegers.

Königszapfen kommen als Kupplungsmittel zwischen einem Sattelauflieger und einem Zugfahrzeug zum Einsatz. Sattelauflieger und Zugfahrzeug bilden gemeinsam einen Sattelzug, auch Gespann genannt. Der Königszapfen ist dabei in der Regel an dem Sattelauflieger befestigt. Während des Kupplungsvorgangs schiebt sich eine Sattelkupplung des Zugfahrzeugs über den Königszapfen. Eine Verriegelung verhindert, dass sich der Königszapfen löst.

Im Falle einer Geradeausfahrt des Sattelzugs können hinsichtlich der auf den Königszapfen wirkenden Kräfte drei Fahrzustände eintreten: Zugbetrieb, Schubbetrieb und ein neutraler Fahrzustand. Im Zugbetrieb zieht die Zugmaschine über den Königszapfen an dem Sattelauflieger. Im Schubbetrieb ist dies umgekehrt, der Sattelauflieger schiebt die Zugmaschine. Der Schubbetrieb stellt sich beispielsweise dann ein, wenn die Zugmaschine aktiv abgebremst wird. Im neutralen Fahrzustand treten zwischen Zugmaschine und Sattelauflieger in Fahrtrichtung keine Kräfte auf. In der Praxis tritt der neutrale Fahrzustand selten und in aller Regel nur übergangsweise auf.

Der Königszapfen überträgt bei bestimmungsgemäßem Gebrauch einen Großteil der Kräfte zwischen Zugfahrzeug und Auflieger, insbesondere Zug- und Schubkräfte beim Beschleunigen und Abbremsen des Gespanns. Aufgrund der hohen Kräfte verschleißt der Königszapfen mit der Zeit. Selbst wenn der Königszapfen zu Beginn seiner Lebensdauer weitgehend ohne Spiel in der Sattelkupplung gehalten wird, wächst das Spiel mit der Zeit, bedingt durch den Verschleiß an. Daher sind Königszapfen oftmals austauschbar konstruiert. Hierzu weist der Königszapfen einen Zapfenabschnitt und einen Flanschabschnitt auf, wobei der Zapfenabschnitt zur Kraftübertragung und der Flanschabschnitt zur Befestigung des Königszapfens an dem Sattelauflieger dient. Die Befestigung erfolgt in der Regel an einem Königszapfenteller des Sattelaufliegers, der hierzu eine Aufnahme für den Königszapfen bzw. dessen Flanschabschnitt aufweist. Der Königszapfenteller kann dabei in eine Ausnehmung im Boden des Sattelaufliegers eingeschweißt sein. Eine solche Anordnung ist beispielsweise aus der DE 1 038 923 B bekannt.

Seitens der Hersteller von Sattelaufliegern, Zugmaschinen und Sattelzügen besteht ein grundsätzliches Interesse daran, Kenntnis über den zu einem bestimmten Zeitpunkt vorliegenden Fahrzustand zu erlangen. Insbesondere besteht ein Interesse an einer kontinuierlichen Erfassung und gegebenenfalls Steuerung des Fahrzustands. Aus dem Stand der Technik sind daher mehrere Systeme bekannt geworden, die dies zu ermöglichen versuchen.

Die GB 2486474 A offenbart hierzu einen Königszapfen, bei dem Piezoelemente in den Zapfenkörper integriert sind. Piezoelemente ändern ihre elektrische Leitfähigkeit, wenn mechanische Belastung auf sie ausgeübt wird. Der Königszapfen weist im Randbereich zwei Piezoelemente auf. Ein Piezoelement ist in Fahrtrichtung vorne und ein Piezoelement in Fahrtrichtung hinten angeordnet. Auf diese Weise kann durch das vorne angeordnete Piezoelement der Schubbetrieb und durch das hinten angeordnete Piezoelement der Zugbetrieb erfasst werden. Weitere Rückschlüsse lassen die Piezoelemente nicht zu.

Aus der EP 2 899 101 A1 ist ein Königszapfen bekannt, der mittels einer Tragplatte an einem Sattelauflieger befestigt ist. Königszapfen und Tragplatte weisen eine gemeinsame vertikale Bohrung auf, die in dem Königszapfen zentral verläuft. In der Bohrung ist ein Hebel angeordnet, auf den mittels zweier Federelemente Kräfte im Zug- und Schubbetrieb übertragen werden, wodurch der Hebel geschwenkt wird. Die Schwenkbewegung des Hebels wird durch Tastelemente erfasst, wodurch der Fahrzeugzustand ermittelt werden kann. Die Federelemente sind in radialen Bohrungen angeordnet, die mit der vertikalen Bohrung in Verbindung stehen. Durch die radialen Bohrungen wird der Königszapfen bei dieser Vorrichtung stark geschwächt, sodass die Gefahr eines Bruchs des Königszapfens besteht.

Die oben erwähnten Sensoriken sind für aktuelle Zwecke nicht ausreichend. Im Zuge der zunehmenden Automatisierung und Autonomisierung von Sattelzügen ist es wünschenswert, weitergehende Informationen über den Zustand des Königszapfens sowie den Fahrzustand des Sattelzugs zu ermitteln. Daher war es Aufgabe der Erfindung, derartige Informationen bereitzustellen.

Diese Aufgabe wird durch eine Königszapfenanordnung nach Anspruch 1 gelöst.

Die Königszapfenanordnung weist folgende Komponenten auf: einen Königszapfen mit einem Flanschabschnitt und einem Zapfenabschnitt, einen Königszapfenteller mit einer Aufnahme für den Königszapfen, ein Befestigungsmittel, mittels dem der Königszapfen an dem Königszapfenteller befestigt ist und optional einen Messgeber. Erfindungsgemäß ist in oder an einer der Komponenten eine Messeinheit vorgesehen, die eingerichtet ist, eine Verformung der Komponente als elektrische Messgröße abzubilden.

Die Erfinder haben erkannt, dass aus der Verformung der genannten Komponenten weitreichende und genaue Rückschlüsse auf den Fahrzustand sowie die Kräfteverhältnisse zwischen Sattelauflieger und Zugfahrzeug möglich sind. Wird die Verformung elektrisch messbar gemacht, so lassen sich Informationen zu dem aktuellen Zustand der Verformung leicht transportieren. Auf diese Weise können diese Informationen beispielsweise dem Zugfahrzeug ohne großen Aufwand verfügbar gemacht werden kann.

Nachfolgend wird eine parallel zu der Fahrtrichtung eines Fahrzeugs verlaufende Achse als Längsachse bezeichnet. Als Hochachse wird die Achse bezeichnet, welche senkrecht und zentral durch den Königszapfen verläuft. Die Hochachse kann auch als Zentralachse bezeichnet werden und stellt den Drehpunkt zwischen Zugfahrzeug und Sattelauflieger dar. Eine als Querachse bezeichnete Achse verläuft senkrecht zur Längsachse und zur Hochachse. Eine Längsebene des Fahrzeugs wird von der Längsachse und der Hochachse aufgespannt. Eine Querebene des Fahrzeugs wird von der Querachse und der Hochachse aufgespannt.

Der Königszapfen umfasst wie oben beschrieben einen Flanschabschnitt und einen Zapfenabschnitt. Der Königszapfen ist bevorzugt im Wesentlichen rotationssymmetrisch. Für die Befestigung an dem Königszapfenteller weist der Königszapfen bevorzugt Bohrungen für die Befestigungsmittel auf. Die Bohrungen sind bevorzugt in dem Flanschabschnitt angeordnet. Die Bohrungen sind ebenfalls bevorzugt gleichmäßig oder sogar rotationssymmetrisch an dem Königszapfen angeordnet. Bei manchen Ausführungsformen weist der Flanschabschnitt des Königszapfens keine Bohrungen für das Befestigungsmittel auf. Der Königszapfen kann bei solchen Ausführungsformen von einem Haltering als Befestigungsmittel an den Königszapfenteller gepresst werden. Der Haltering wird bevorzugt mit Schrauben und optional Muttern an dem Königszapfenteller befestigt. In beiden Fällen ist der Königszapfen leicht austauschbar.

Der Königszapfenteller weist bevorzugt eine Pfannenform auf, wobei die Pfannenform bei bestimmungsgemäßem Gebrauch auf dem Kopf steht. Die Aufnahme für den Königszapfen in dem Königszapfenteller ist bevorzugt eine Vertiefung, die vorteilhafterweise rotationssymmetrisch ist. Die Aufnahme kann jedoch auch nur aus einer ebenen Fläche bestehen. Zur Befestigung des Königszapfens weist die Aufnahme bevorzugt Bohrungen auf, durch welche die Befestigungsmittel (Schrauben) treten können.

Bevorzugt sind mehrere Befestigungsmittel vorgesehen. Bei den Befestigungsmitteln handelt es sich bevorzugt um Schrauben und optional Muttern. Sind nur Schrauben vorgesehen, so werden diese bevorzugt von unten durch die Bohrungen des Flanschabschnitts oder den Haltering geschoben und dann in dem Königszapfenteller verschraubt. Die Bohrungen des Königszapfentellers weisen dann ein Innengewinde auf. Bei anderen Ausführungsformen umfassen die Befestigungsmittel Schrauben und Muttern. Die Bohrungen in dem Königszapfen oder dem Haltering und dem Königszapfenteller sind dann nur Durchgangsbohrungen ohne Gewinde. Die Schrauben können dann beispielsweise von unten durch die Bohrungen geschoben werden und oben durch eine auf die Schraube aufgedrehte Mutter arretiert werden.

Damit eine Verformung der jeweiligen Komponente möglichst genau von der Messeinheit abgebildet werden kann, ist die Positionierung der Messeinheit von großer Bedeutung. Je weiter die Messeinheit von Befestigungspunkten der jeweiligen Komponente entfernt ist, desto deutlicher machen sich Verformungen bemerkbar. Andererseits werden die Kräfte, welche die Verformung bewirken, an den Befestigungspunkten der jeweiligen Komponente aufgenommen, und können dort gut aufgenommen und abgebildet werden, wodurch ebenfalls Rückschlüsse auf die Verformungen möglich sind. Beim Königszapfen werden die Befestigungspunkte durch die Befestigungsmittel definiert. Bei dem Königszapfenteller liegen die Befestigungspunkte dort, wo der Königszapfenteller mit dem Rest des Sattelaufliegers verbunden, beispielsweise verschweißt, ist.

Ein bevorzugter Ort für die Anordnung der Messeinheit ist eine Grenzfläche zwischen dem Befestigungsmittel und entweder dem Königszapfen oder dem Königszapfenteller. So kann die Messeinheit beispielsweise zwischen einem Kopf einer als Befestigungsmittel dienenden Schraube und dem Flanschabschnitt, zwischen einem Kopf einer als Befestigungsmittel dienenden Schraube und dem Königszapfenteller, zwischen einer als Befestigungsmittel dienenden Mutter und dem Flanschabschnitt oder zwischen einer als Befestigungsmittel dienenden Mutter und dem Königszapfenteller angeordnet sein. An diesen Grenzflächen machen sich Verformungen der Komponenten stark bemerkbar, da ein Teil der Kräfte, welche die Verformung bewirken, von den Befestigungsmitteln aufgenommen werden. Eine weitere Grenzfläche, an welcher die Messeinheit bevorzugt angeordnet wird, ist die Grenzfläche zwischen dem Flanschabschnitt des Königszapfens und dem Königszapfenteller. Dabei kann die Messeinheit sowohl in radialer Richtung als auch in axialer Richtung entlang der Hochachse zwischen dem Flanschabschnitt und dem Königszapfenteller angeordnet sein. Ein weiterer, ebenfalls bevorzugter Ort für die Anordnung der Messeinheit ist der Übergang von der Außenumfangsfläche des Zapfenabschnitts zu dem Flanschabschnitt. An diesem Übergang machen sich Verformungen des Zapfenabschnitts besonders stark bemerkbar, wodurch die Verformung gut als elektrische Messgröße durch die Messeinheit abgebildet werden kann. Die Messeinheit kann ferner an einer Außenumfangsfläche des Zapfenabschnitts, an einer Oberseite oder Unterseite des Flanschabschnitts oder in einer Ausnehmung auf einer Oberseite des Königszapfentellers oder des Flanschabschnitts angeordnet werden.

Eine Anordnung der Messeinheit an dem Messgeber ist ebenfalls von großem Vorteil. Unter einem Messgeber wird ein Bauteil verstanden, dessen primäre Funktion es ist, eine Verformung einer der Komponenten, mit welcher der Messgeber in Verbindung steht, zu verstärken. Auf diese Weise können auch kleine Verformungen durch eine an dem Messgeber angeordneten Messeinheit abgebildet werden. Der Messgeber kann beispielsweise ein Messbalken und/oder mit dem Königszapfenteller verbunden sein. Beispielsweise kann der Messbalken an einem Ende mit dem Königszapfenteller verschweißt und an dem anderen Ende mit einem Chassis des Sattelaufliegers verbunden sein. Dazwischen schwebt der Messbalken frei. Das Chassis ist sehr starr und verformt sich auch bei größeren Kräften kaum. Verformt sich nun der Königszapfenteller aufgrund einer zwischen dem Zugfahrzeug und dem Sattelauflieger wirkenden Kraft, so wird diese Verformung auf den Messbalken übertragen und dort verstärkt. Die an dem Messbalken angeordnete Messeinheit kann so die Verformung des Messgebers abbilden. Aus der sich ergebenden Messgröße können Rückschlüsse auf die Verformung des Königszapfentellers gezogen werden. Die Messeinheit ist bevorzugt mittig an dem Messgeber angeordnet. Auch kleine Verformungen des Königszapfentellers können so gut abgebildet werden. Der Messgeber kann auch eine Sensorwelle sein, die in einer Bohrung des Königszapfens, insbesondere einer zentralen Bohrung, angeordnet ist.

Eine Anordnung der Messeinheit an dem Königszapfen ist von besonderem Vorteil, da dieser verschleißbedingt ohnehin oftmals ausgetauscht werden muss. Das bedeutet, dass auch bei älteren Fahrzeugen oder Sattelaufliegern die erfindungsgemäßen Messeinheiten vorgesehen werden können, ohne dass große Umbaumaßnahmen an dem Sattelauflieger nötig sind. Eine Anordnung der Messeinheit auf einer Unterseite des Königszapfentellers ist ebenfalls vorteilhaft, da diese beim Austausch des Königszapfens leicht zugänglich ist. So ist eine Wartung oder ein Austausch der Messeinheit leicht möglich. Die Anordnung der Messeinheit direkt an dem Königszapfen hat ferner den Vorteil, dass eine erste Kalibrierung bereits vor dem Einbau des Königszapfens in die Königszapfenanordnung oder in den Sattelauflieger erfolgen kann.

Eine Anordnung der Messeinheit auf der Oberseite des Flanschabschnitts ist ebenfalls vorteilhaft, da die Kabelführung ausgehend von der Messeinheit vereinfacht wird. Auf der Oberseite kann zudem eine Abdeckung für die Messeinheit vorgesehen sein. Die Abdeckung für die Messeinheit bietet der Messeinheit Schutz vor Umwelteinflüssen.

Die Messeinheit ist bevorzugt in einer Ausnehmung der Komponente angeordnet. Daraus ergibt sich der Vorteil, dass die Messeinheit nicht aufträgt, sodass angrenzende Bauteile nicht aufwendig an das Vorhandensein der Messeinheit angepasst werden müssen. Dadurch können weiterhin standardisierte oder bereits bestehende Bauteile verwendet werden. Die Ausnehmung ist bevorzugt eine Nut oder ein Langloch.

Die Messeinheit ist bevorzugt an einem Radius angeordnet. Radius bezeichnet dabei insbesondere die Krümmung einer Kante oder Ecke, bei der ein scharfer Übergang zwischen zwei Flächen durch einen Kreisbogen ersetzt wird. Ein Radius ist insbesondere eine um eine Achse verlaufende Fläche, welche im Querschnitt die Form eines Kreisbogens hat. Ein Radius kann auch als Rundung bezeichnet werden. Ein Radius kommt beispielsweise oftmals an dem Übergang von Flanschabschnitt zu Zapfenabschnitt des Königszapfens zum Einsatz. Es hat sich gezeigt, dass die Messung an Radien besonders vorteilhaft ist, da die Spannungswerte durch Verformung dort am größten sind. Ein bevorzugter Ort für die Messeinheit ist daher ein Übergang von Flanschabschnitt zu Zapfenabschnitt des Königszapfens. Ein weiterer, besonders vorteilhafter Ort für die Messeinheit ist an einem Radius einer Ausnehmung auf der Oberseite des Flanschabschnitts, insbesondere am Rand der Ausnehmung.

Zur Erfassung und Weiterverarbeitung der elektrischen Messgröße ist bevorzugt eine Auswerteeinrichtung vorgesehen, an welche die Messeinheit angeschlossen ist. Die Auswerteeinrichtung ist bevorzugt Teil des Sattelaufliegers und insbesondere der Königszapfenanordnung, damit die Auswertung auch erfolgen kann, wenn (noch) keine elektrische oder elektronische Verbindung zum Zugfahrzeug besteht. Die Auswerteeinrichtung ist bevorzugt unter der Abdeckung angeordnet oder Teil der Abdeckung.

Die Messeinheit weist bevorzugt einen elektrischen Widerstand und zwei elektrische Anschlüsse auf. Auf diese Weise kann die elektrische Messgröße der Messeinheit von der an die zwei elektrischen Anschlüsse angeschlossenen Auswerteeinrichtung erfasst und weiterverarbeitet werden. Besonders bevorzugt ist die Messeinheit ein Dehnungsmessstreifen oder ein Piezoelement. Für den Einsatz zwischen zwei Komponenten bieten sich besonders Piezoelemente an. Die Piezoelemente werden dabei bevorzugt mit einer Vorspannung zwischen den beiden Komponenten versehen. Abweichungen von dieser Vorspannung können dann erfasst werden und aus diesen Werten können Rückschlüsse auf die jeweiligen Verformungen gezogen werden. Die Verwendung solcher Piezoelemente bietet zudem noch den Vorteil, dass die eingestellte Vorspannung erfasst werden kann. Dadurch kann bei der ersten Montage ermittelt werden, ob die gewünschte Vorspannung erreicht wurde oder ob beispielsweise vergessen wurde, eine Schraube anzuziehen.

Die Komponente kann eine Kabelführung aufweisen, die bevorzugt eine Nut und/oder eine Bohrung umfasst. Die Kabelführung mündet bevorzugt zu den elektrischen Anschlüssen und/oder der Auswerteeinrichtung. Auf diese Weise kann ausgehend von den elektrischen Anschlüssen ein Kabel durch die Komponente geführt werden, damit die Messeinheit an eine Auswerteeinrichtung angeschlossen werden kann. Auch Komponenten ohne Messeinheit können eine Kabelführung aufweisen. Die Kabelführung kann auch an einen Sender eines kontaktlosen Kommunikationssystems angeschlossen sein, welcher das Signal der Messeinheit an einen Empfänger, der beispielsweise am Zugfahrzeug sitzt, überträgt. Der Empfänger ist dann bevorzugt mit der Auswerteeinrichtung verbunden. Die Kabelführung kann auch an einen Stecker eines Stecksystems angeschlossen sein. Der Stecker ist bevorzugt komplementär zu einem Stecker des Zugfahrzeugs. Auch auf diese Weise kann die Messgröße der Messeinheit von dem Zugfahrzeug bzw. einer Auswerteeinrichtung des Zugfahrzeugs ermittelt werden.

Die von der Messeinheit oder von mehreren Messeinheiten kommenden Kabel können in einem Stecker zusammengefasst werden, der beispielsweise mit der Auswerteeinrichtung verbunden werden kann. So kann beispielsweise die Auswerteeinrichtung am Fahrzeug verbleiben, während eine Komponente mit ihren Messeinheiten auf einfache Weise ausgetauscht werden kann.

Zudem ist es möglich, die Auswerteeinrichtung für die Messeinheit oder die Messgruppe ebenfalls unter der Abdeckung anzuordnen, woraus sich eine kompakte Gesamtvorrichtung ergibt. Die Abdeckung kann eine zentrale Bohrung für die Sensorwelle aufweisen.

Bei manchen Ausführungsformen kommen mehrere Messeinheiten zum Einsatz. Werden Messeinheiten an vergleichbaren Orten angeordnet, so werden sie als gleichartig bezeichnet. Beispielsweise können mehrere gleichartige Messeinheiten um die Hochachse herum an dem Übergang von der Außenumfangsfläche des Zapfenabschnitts zu dem Flanschabschnitt angeordnet werden. Zusätzlich können auch weitere Messeinheiten an einem anderen Ort, beispielsweise an dem Messgeber, angeordnet sein. Gleichartig angeordnete Messeinheiten sind bevorzugt gleichmäßig verteilt, beispielsweise um die Hochachse herum. Besonders bevorzugt sind wenigstens drei gleichartig angeordnete Messeinheiten vorgesehen. Drei Messeinheiten spannen eine Ebene auf und können dadurch Verformungen der jeweiligen Komponente besonders gut abbilden.

Messeinheiten können zu Messgruppen zusammengefasst werden. Die Messeinheiten einer Messgruppe werden von einer Auswerteeinrichtung gemeinsam ausgewertet. Als besonders vorteilhaft hat es sich erwiesen, wenn die Messeinheiten innerhalb ihrer Messgruppe zu einer Brückenschaltung miteinander verbunden sind, insbesondere zu einer Wheatstoneschen Vollbrücke. Hierzu werden vier Messeinheiten vorgesehen, von denen jeweils zwei in Reihe geschaltet werden und dadurch jeweils einen Strang bilden. Die beiden Stränge mit jeweils zwei Messeinheiten werden parallel geschaltet. Durch eine Messung der Spannung zwischen den beiden Punkten, die jeweils zwischen den Messeinheiten eines Strangs liegen, können Rückschlüsse auf die Größe der Widerstände der Messeinheiten und damit auf die Verformung der zugehörigen Komponente gezogen werden.

Durch die Messgruppe wird bevorzugt eine Verformung des Königszapfens um die Längsachse oder um die Querachse erfasst. Bevorzugt sind die Messeinheiten einer Messgruppe spiegelsymmetrisch zu der Längsebene und/oder der Querebene angeordnet. Dadurch kann die Verformung des Königszapfens um die Längsachse oder um die Querachse besonders gut erfasst werden. Alternativ oder zusätzlich können die Messeinheiten einer Messgruppe rotationssymmetrisch um eine Zentralachse des Königszapfens angeordnet sein. Es können auch mehrere Messgruppen vorgesehen sein, die zur Erfassung unterschiedliche Verformungen oder die Verformung unterschiedlicher Komponenten ausgebildet sind, wobei bevorzugt alle Messgruppen mit der gleichen Auswerteeinrichtung verbunden sind.

Die Messeinheit ist bevorzugt mit einer Spannungsquelle verbunden, wobei die Spannungsquelle Teil der Zugmaschine sein kann. Während des Kupplungsvorgangs von Zugfahrzeug und Sattelauflieger besteht möglicherweise oder teilweise noch keine elektrische Verbindung zwischen Zugfahrzeug und Sattelauflieger. Um auch während des Kupplungsvorgangs die Verformungen erfassen zu können, ist bevorzugt eine Spannungsquelle vorgesehen, die Teil des Sattelaufliegers, insbesondere der Königszapfenanordnung, ist und die Messeinheit sowie die Auswerteeinrichtung mit Energie versorgt.

Die Aufgabe der Erfindung wird auch durch einen Sattelauflieger mit einer Königszapfenanordnung gemäß der obigen Beschreibung sowie durch einen Sattelzug mit einem Zugfahrzeug und diesem Sattelauflieger gelöst. Die Aufgabe der Erfindung wird auch durch einen Königszapfen gelöst, bei dem in oder an dem Königszapfen eine Messeinheit vorgesehen ist, die eingerichtet ist, eine Verformung des Königszapfens als elektrische Messgröße abzubilden. Der Königszapfen ist bevorzugt zur Verwendung in einer Königszapfenanordnung ausgestaltet. Der Königszapfen ist bevorzugt wie oben beschrieben ausgestaltet.

Die Aufgabe der Erfindung wird auch durch ein Verfahren zum Erfassen eines Fahrzustands eines Sattelaufliegers gelöst. Dabei wird eine Königszapfenanordnung gemäß der obigen Beschreibung vorgesehen. Die elektrische Messgröße, insbesondere der Widerstand, der Messeinheit wird von der Auswerteeinrichtung erfasst und daraus wird die Verformung der zugehörigen Komponente ermittelt.

Bei vorteilhaften Weiterbildungen ist die Messeinheit an dem Königszapfen vorgesehen und es erfolgt eine erste Kalibrierung vor dem Einbau des Königszapfens in die Königszapfenanordnung oder in den Sattelauflieger.

Durch Verschleiß, Verzug, Temperatureinfluss und dergleichen ändern sich die Messgrößen der Messeinheit mit der Zeit. Das Verfahren umfasst daher bevorzugt die Möglichkeit einer Neukalibrierung. Dabei wird ein Signal erzeugt, wenn sich der Sattelauflieger in einem abgekuppelten Zustand befindet. Das Signal wird an die Auswerteeinrichtung übermittelt. Die Auswerteeinrichtung setzt dann den aktuellen Wert der Messgröße der Messeinheit als neutralen Wert fest. Durch die Neukalibrierung werden anschließende Messungen genauer. Das Signal an die Auswerteeinrichtung kann automatisch beim Abkuppeln erfolgen oder manuell von einem Bediener ausgelöst werden. Das Signal kann von dem Zugfahrzeug an den Sattelauflieger übermittelt werden oder der Sattelauflieger erkennt selbst, dass das Zugfahrzeug abgekuppelt hat.

Bevorzugt wird durch die Messeinheiten ermittelt, ob sich der Sattelzug in Nulllage (Knickwinkel gleich Null) befindet, ob also Zugfahrzeug und Sattelauflieger in die gleiche Richtung ausgerichtet sind. Hierzu sind mehrere Messeinheiten vorhanden, die bevorzugt in einer Wheatstoneschen Messbrücke verschaltet sind. Besonders genau kann die Ermittlung der Nulllage erfolgen, wenn zwei Messgruppen mit jeweils mehreren, bevorzugt vier, Messeinheiten vorgesehen sind. Die Messeinheiten sind bevorzugt gleichmäßig um die Hochachse angeordnet.

Die Erfindung wird anhand der Zeichnungen beispielhaft dargestellt und erläutert. Die nachfolgend aufgeführten Figuren sind in den Zeichnungen dargestellt:
- Figur 1: schematisch eine Königszapfenanordnung in einer Seitenansicht
- Figur 2: schematisch einen Königszapfen in einer Seitenansicht
- Figur 3: schematisch einen Königszapfen in einer Draufsicht
- Figur 4: schematisch eine Königszapfenanordnung in einer Seitenansicht

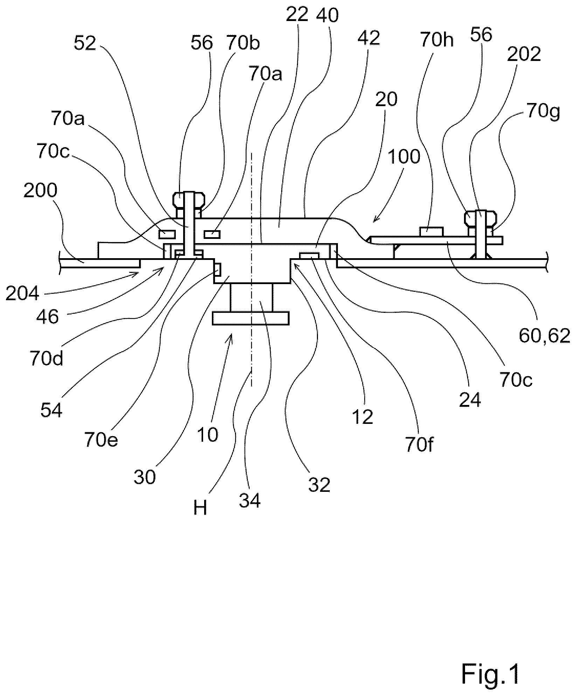

Die in der Figur 1 dargestellte Königszapfenanordnung 100 weist einen Königszapfen 10, einen Königszapfenteller 40, Befestigungsmittel 50 und einen Messgeber 60 auf. Der Königszapfen 10 weist einen Flanschabschnitt 20 und einen Zapfenabschnitt 30 auf, die einteilig sind und an einem Übergang 12 ineinander übergehen. Der Flanschabschnitt 20 ist scheibenförmig, der Zapfenabschnitt 30 ist im Wesentlichen zylinderförmig und weist eine Einschnürung 34 auf, in welcher der Königszapfen 10 von einer nicht dargestellten Sattelkupplung gehalten wird. Der Flanschabschnitt 20 weist eine Oberseite 22 und eine Unterseite 24 auf. Die Unterseite 24 verläuft um den Zapfenabschnitt 30 herum. Der Königszapfen 10 definiert eine Hochachse H, die zentral durch den Zapfenabschnitt 30 des Königszapfens 10 und in vertikaler Richtung verläuft.

Der Königszapfenteller 40 ist pfannenförmig und weist an seiner Unterseite eine Aufnahme 46 für den Königszapfen 10 auf. Die Aufnahme 46 ist derart ausgestaltet, dass sie den Flanschabschnitt 20 des Königszapfens 10 aufnehmen kann.

Der Königszapfen 10 ist mittels der Befestigungsmittel 50 an dem Königszapfenteller befestigt. Von den Befestigungsmitteln 50 ist beispielhaft eine Schraube 52 und eine Mutter 56 dargestellt. Königszapfen 10 und Königszapfenteller 40 weisen zueinander fluchtende Bohrungen auf, durch welche die Schraube 52 von unten hindurchgesteckt wird. Anschließend wird die Mutter 56 auf der Schraube 52 befestigt und dadurch werden die beiden Komponenten Königszapfen 10 und Königszapfenteller 40 miteinander verbunden.

Die Königszapfenanordnung 100 ist an einem Aufliegerboden 200 angebracht. Der Aufliegerboden 200 weist hierzu einen Durchbruch 204 auf. Der Königszapfenteller 40 wird über dem Durchbruch 204 platziert und dort angeschweißt. Anschließend kann der Königszapfen 10 von unten an dem Königszapfenteller 40 befestigt werden.

An dem Aufliegerboden 200 ist ferner seitlich des Königszapfentellers ein Gewindestift 202 vorgesehen, der parallel zur Hochachse H verläuft. Der Gewindestift 202 ist auf den Aufliegerboden 200 geschweißt. Der Königszapfenteller 40 ist über einen Messbalken 62 als Messgeber 60 mit dem Gewindestift 202 verbunden. Der Messbalken 62 wird hierzu mit einer Bohrung über den Gewindestift 202 gelegt. An einem Ende ist der Messbalken 62 mit dem Königszapfenteller 40 verschweißt. Eine andere Befestigungsart zwischen Königszapfenteller 40 und Messbalken 62 ist jedoch ebenfalls möglich. Anschließend wird auf den Gewindestift 202 eine Mutter 56 geschraubt und eine Vorspannung erzeugt.

Bei der in Figur 1 dargestellten Königszapfenanordnung 100 sind in und an mehreren der Komponenten Messeinheiten 70a, 70b, 70c, 70d, 70e, 70f, 70g, 70h vorgesehen, die jeweils eingerichtet sind, eine Verformung der jeweiligen Komponente als elektrische Messgröße abzubilden.

Zwei Messeinheiten 70a sind in dem Körper des Königszapfentellers 40 verbaut. Hierbei kann es sich beispielsweise um Dehnungsmessstreifen handeln. Verformt sich der Königszapfenteller 40, so verändert sich der elektrische Widerstand der Messeinheiten 70a, was von einer Auswerteeinrichtung (nicht dargestellt) erfasst werden kann. Die Messeinheiten 70a bilden eine Messgruppe.

Die Messeinheit 70b ist ein Piezoelement, welches auf der Oberseite 42 des Königszapfentellers 40 um die Schraube 52 gelegt wird, bevor die Mutter 56 auf die Schraube 52 aufgeschraubt wird. Die Messeinheit 70b befindet sich somit zwischen der Mutter 56 und dem Königszapfenteller 40. Verformt sich der Königszapfenteller 40, so wird eine Kraft auf das Piezoelement ausgeübt. An dem Piezoelement entsteht dadurch eine elektrische Spannung, die von der Auswerteeinrichtung gemessen werden kann.

Die Messeinheiten 70c sind in radialer Richtung zwischen dem Königszapfen 10, genauer dem Flanschabschnitt 20, und dem Königszapfenteller 40, angeordnet. Es sind mehrere Messeinheiten 70c in Umfangsrichtung rotationssymmetrisch um die Hochachse H herum versetzt zueinander angeordnet, von denen nur zwei dargestellt sind. Bei den Messeinheiten 70c handelt es sich um Piezoelemente, an denen wie oben beschrieben eine Spannungsmessung erfolgen kann.

Die Messeinheit 70d ist in Form einer Unterlegscheibe unter einem Kopf 54 der Schraube 52 angeordnet. Somit ist die Messeinheit 70d zwischen dem Kopf 54 und dem Flanschabschnitt 20 des Königszapfens 10 angeordnet. Bei der Messeinheit 70d handelt es sich erneut um ein Piezoelement. Wird auf den Königszapfen 10 eine Kraft ausgeübt, so wird schlussendlich eine Kraft auf das Piezoelement ausgeübt, was zu einer Spannung führt, die gemessen werden kann.

Die Messeinheit 70e ist ein Dehnungsmessstreifen, der an einer Außenumfangsfläche 32 des Zapfenabschnitts 30 angeordnet ist. Eine Verformung des Königszapfens 10 führt dazu, dass sich der elektrische Widerstand des Dehnungsmessstreifens ändert, was gemessen werden kann.

Die Messeinheit 70f ist ebenfalls ein Dehnungsmessstreifen. Dieser ist an einer Unterseite 24 des Flanschabschnitts 20 des Königszapfens 10 angeordnet. Verformt sich der Königszapfen 10, so ändert sich auch hier der elektrische Widerstand des Dehnungsmessstreifens, was von der Auswerteeinrichtung erfasst werden kann.

Die Messeinheit 70g ist zwischen dem Messbalken 62 und der auf dem Gewindestift 202 angeordneten Mutter 56 angeordnet. Die Messeinheit 70g ist ein Piezoelement. Verformt sich der Königszapfenteller 40, so wird diese Verformung auf den Messbalken 62 übertragen und dort verstärkt. Der Messbalken 62 übt dann eine Kraft auf die Messeinheit 70g aus, wodurch aufgrund des Piezoeffekts eine elektrische Spannung entsteht, die erfasst werden kann.

Auf dem Messbalken 62 selbst ist eine Meseinheit 70h angeordnet, bei der es sich um einen Dehnungsmessstreifen handelt. Verformt sich der Messbalken 62 aufgrund einer Verformung des Königszapfentellers 40, so ändert sich der Widerstand des Dehnungsmessstreifens, was wiederum von der Auswerteeinrichtung erfasst werden kann.

Jede der hier beschriebenen Messeinheiten 70a bis 70h kann bei anderen Ausführungsformen auch ohne die restlichen Messeinheiten 70a bis 70h oder nur mit einem Teil der Messeinheiten 70 bis 70h zum Einsatz kommen.

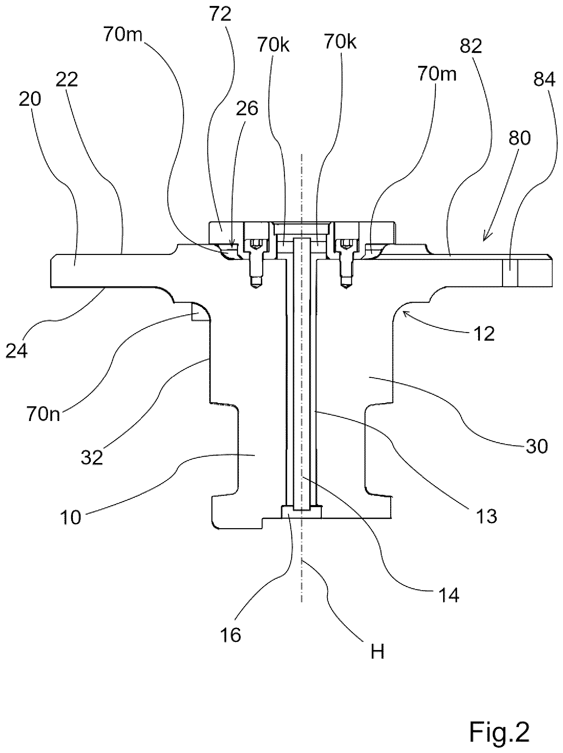

Der in Figur 2 dargestellte Königszapfen 10 weist ebenfalls einen Flanschabschnitt 20 und einen Zapfenabschnitt 30 auf, die im Bereich eines Übergangs 12 ineinander übergehen. Der Königszapfen 10 weist eine Zentralbohrung 13 auf, innerhalb der eine Sensorwelle 14 angeordnet ist. Die Sensorwelle 14 ist am unteren Ende in einem Festlager 16 gelagert. Am oberen Ende ist die Sensorwelle 14 von Messeinheiten 70k umringt.

Die Messeinheiten 70k bilden eine Messgruppe und sind zwischen der Sensorwelle 14 und der Zentralbohrung 13 rotationssymmetrisch um die Hauptachse H angeordnet. Bei den Messeinheiten 70k handelt es sich um Piezoelemente. Verformt sich der Königszapfen 10, hier besonders der Zapfenabschnitt 30, so wird die Sensorwelle 14 gebogen und übt Kräfte auf die Messeinheiten 70k aus. An den Messeinheiten 70k entsteht durch den Piezoeffekt eine Spannung, die für jede Messeinheit 70k erfasst werden kann. Die auf eine einzelne Messeinheit 70k ausgeübte Kraft hängt von der Belastungsrichtung ab. Dadurch kann aufgrund der verschiedenen Kräfte, die an den Messeinheiten 70k entstehen die Belastungsrichtung von einer Auswerteeinrichtung (nicht dargestellt) ermittelt werden.

Auf der Oberseite 22 des Flanschabschnitts 20 ist eine zentrale Vertiefung 26 vorgesehen. Am radial äußeren Rand der Vertiefung 26 sind rotationssymmetrisch um die Hauptachse H mehrere Messeinheiten 70m angeordnet. Bei den Messeinheiten 70m handelt es sich um Dehnungsmessstreifen. Die Messeinheiten 70m bilden eine Messgruppe. Es hat sich gezeigt, dass die Messung an Radien, wie hier am Rand der Vertiefung 26, besonders vorteilhaft ist, da die Spannungswerte durch Verformung dort am größten sind. Da mehrere Messeinheiten 70m vorhanden sind, kann durch eine Auswerteeinrichtung ermittelt werden, aus welcher Richtung der Königszapfen 10 belastet wird.

Im Bereich des Übergangs 12 ist eine Messeinheit 70n angeordnet. Bei der Messeinheit 70n handelt es sich um einen Dehnungsmessstreifen. Auch hier wird im Bereich eines Radius die Verformung gemessen, da dort die Spannungswerte am höchsten sind.

Die Messeinheiten 70a, 70b, 70c, 70d, 70e, 70f, 70g, 70h, 70k, 70m und 70n bilden Verformungen der Komponenten als elektrische Messgröße ab. Um die jeweilige elektrische Messgröße erfassen zu können, ist es vorteilhaft, wenn die Messeinheiten über Leitungen mit einer Auswerteeinrichtung (nicht dargestellt) verbunden werden. Die Messeinheiten 70a, 70b, 70c, 70d, 70e, 70f, 70g, 70h, 70k, 70m und 70n weisen hierzu elektrische Anschlüsse auf. Sowohl der Königszapfen 10 gemäß Figur 2 als auch die Königszapfenanordnung 100 gemäß Figur 1 können eine Kabelführung 80 aufweisen, um ein Anschlusskabel zu der Auswerteeinrichtung oder an einen anderen Ort zu führen. In Figur 2 umfasst die Kabelführung 80 eine Nut 82 und eine Bohrung 84. Die Nut 82 und die Bohrung 84 dienen der Abführung des Signals der einen Messeinheit 70m. Ausgehend von der Messeinheit 70m kann eine Leitung radial nach außen durch die Nut 82 und anschließend nach unten durch die Bohrung 84 gelegt werden. In dem Bereich, wo die Leitung aus der Bohrung 84 nach unten austritt, befindet sich bei vielen Aufliegern ein Steckverbinder, der mit einem komplementären Steckverbinder des Zugfahrzeugs gekoppelt wird. Auf diese Weise kann das Signal bzw. die elektrische Messgröße der Messeinheit 70m direkt durch die Auswerteeinrichtung an dem Zugfahrzeug erfasst werden. Die Auswerteeinrichtung kann jedoch auch Teil des Aufliegers sein.

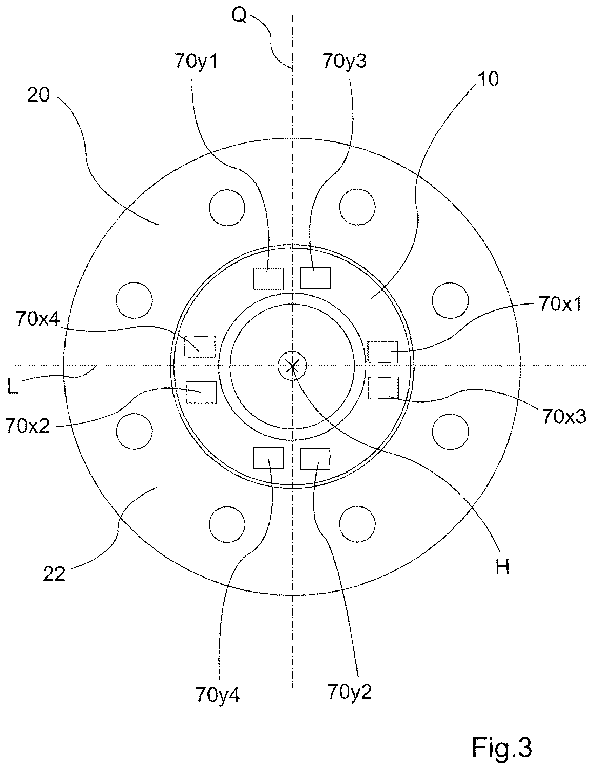

Bei dem in Figur 3 dargestellten Königszapfen 10 sind mehrere Messgruppen vorgesehen. Eine erste Messgruppe umfasst vier Messeinheiten 70x1, 70x2, 70x und 70x4. Eine zweite Messgruppe umfasst vier Messeinheiten 70y1, 70y2, 70y3 und 70y4. Die Messeinheiten innerhalb einer Messgruppe sind zu einer Wheatstonesche Messbrücke verschaltet. Innerhalb der Messgruppen sind die Messeinheiten spiegelsymmetrisch zu einer Längsachse L und einer Querachse Q angeordnet Durch die zwei Messgruppen können Verformungen des Königszapfens in einer von der Längsachse L und der Querachse Q aufgespannten Ebene ermittelt werden. Zudem kann durch die Messeinheiten 70x1 - 70y4 ermittelt werden, ob sich der Sattelzug in Nulllage (Knickwinkel gleich Null) befindet, ob also Zugfahrzeug und Sattelauflieger in die gleiche Richtung ausgerichtet sind. Die Messeinheiten 70x1 - 70y4 sind gleichmäßig um die Hochachse H angeordnet.

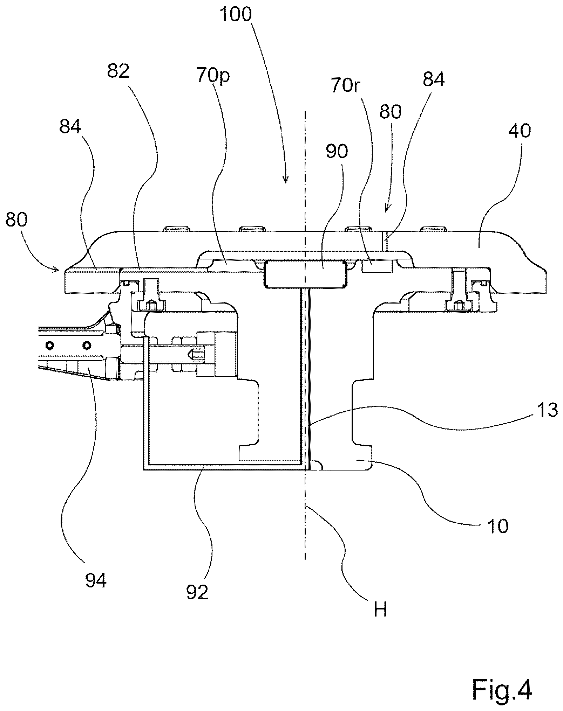

Bei der in Figur 4 gezeigten Königszapfenanordnung 100 ist erneut ein Königszapfen 10 und ein Königszapfenteller 40 vorgesehen. Der Königszapfen 10 ist im Wesentlichen rotationssymmetrisch und mit seinem Flanschbereich 20 in einer Aufnahme 46 des Königszapfentellers 40 aufgenommen.

Die Königszapfenanordnung 100 umfasst zwei Messeinheiten 70p, 70r. Die Messeinheiten 70p, 70r sind auf einer Oberseite 22 des Flanschabschnitts 20 angeordnet. In der Oberseite 22 des Flanschabschnitts 20 des Königszapfens 10 ist eine Nut 82 vorgesehen, die als Teil einer Kabelführung 80 dient. Die Nut 82 geht in eine horizontale Bohrung 84 in dem Königszapfenteller 40 über. Ein Kabel von der Messeinheit 70p kann radial nach außen zunächst durch die Nut 82 und anschließend durch die Bohrung 84 geführt werden und dann weiter zu einer Auswerteeinrichtung (nicht dargestellt) geführt werden, die Bestandteil des Aufliegers oder des Zugfahrzeugs sein kann. Die Leitung kann auch an einen Sender eines kontaktlosen Kommunikationssystems angeschlossen sein, welcher das Signal der Messeinheit 70p an einen Empfänger, der beispielsweise am Zugfahrzeug sitzt, überträgt. Diese Art der Übertragung ist bei allen Messeinheiten 70a - 70r möglich. In dem Königszapfenteller 40 ist ferner eine vertikale Bohrung 84 vorgesehen, die als Kabelführung 80 für die Messeinheit 70r dient. Dort kann ein Kabel von der Messeinheit 70r nach oben weggeführt werden.

Der Königszapfen 10 weist eine Zentralbohrung 13 auf. Die Zentralbohrung 13 kann ebenfalls als Kabelführung 80 dienen. Bei der hier gezeigten Ausführungsform ist auf der Oberseite 22 ein Drehwinkelsensor 90 vorgesehen, dessen Signal ebenfalls durch die Zentralbohrung 13 nach unten geführt wird. Das Signal des Drehwinkelsensors 90 wird über eine Leitung 92 zu einem Ausleger 94 geführt, von wo es beispielsweise zu einem Stecker des Aufliegers (nicht dargestellt) geführt werden kann. Die Kabelführung 80 der Messeinheiten kann bei allen Ausführungsformen in gleicher Weise zu dem Stecker geführt werden.

### Bezugszeichenliste

- 10: Königszapfen
- 12: Übergang
- 13: Zentralbohrung
- 14: Sensorwelle
- 16: Festlager
- 20: Flanschabschnitt
- 22: Oberseite des Flanschabschnitts
- 24: Unterseite des Flanschabschnitts
- 26: Vertiefung
- 30: Zapfenabschnitt
- 32: Außenumfangsfläche des Zapfenabschnitts
- 34: Einschnürung
- 40: Königszapfenteller
- 42: Oberseite des Königszapfentellers
- 46: Aufnahme
- 50: Befestigungsmittel
- 52: Schraube
- 54: Kopf der Schraube
- 56: Mutter
- 60: Messgeber
- 62: Messbalken
- 70a: Messeinheit
- 70b: Messeinheit
- 70c: Messeinheit
- 70d: Messeinheit
- 70e: Messeinheit
- 70f: Messeinheit
- 70g: Messeinheit
- 70h: Messeinheit
- 70k: Messeinheit
- 70m: Messeinheit
- 70n: Messeinheit
- 70p: Messeinheit
- 70r: Messeinheit
- 72: Abdeckung für die Messeinheit
- 80: Kabelführung
- 82: Nut
- 84: Bohrung
- 90: Drehwinkelsensor
- 92: Leitung
- 94: Ausleger
- 100: Königszapfenanordnung
- 200: Aufliegerboden
- 202: Gewindestift
- 204: Durchbruch
- Q: Querachse
- L: Längsachse
- H: Hochachse

## Patentansprüche

1. Königszapfenanordnung mit folgenden Komponenten:
- einem Königszapfen mit einem Flanschabschnitt und einem Zapfenabschnitt
- einem Königszapfenteller mit einer Aufnahme für den Königszapfen
- einem Befestigungsmittel, mittels dem der Königszapfen an dem Königszapfenteller befestigt ist
- optional einem Messgeber
**dadurch gekennzeichnet,**
**dass** in oder an einer der Komponenten eine Messeinheit vorgesehen ist, die eingerichtet ist, eine Verformung der Komponente als elektrische Messgröße abzubilden.

2. Königszapfenanordnung nach Anspruch 1,
**dadurch gekennzeichnet,**
**dass** die Messeinheit an folgendem Ort angeordnet ist:
- zwischen einem Kopf einer als Befestigungsmittel dienenden Schraube und dem Flanschabschnitt
- zwischen einem Kopf einer als Befestigungsmittel dienenden Schraube und dem Königszapfenteller
- zwischen einer als Befestigungsmittel dienenden Mutter und dem Flanschabschnitt
- zwischen einer als Befestigungsmittel dienenden Mutter und dem Königszapfenteller
- zwischen dem Flanschabschnitt und dem Königszapfenteller
- an einem Radius
- an einem Übergang von der Außenumfangsfläche des Zapfenabschnitts zu dem Flanschabschnitt
- an einer Oberseite oder Unterseite des Flanschabschnitts
- (in einer Ausnehmung) auf einer Oberseite des Königszapfentellers oder des Flanschabschnitts
- an einer Außenumfangsfläche des Zapfenabschnitts
- an dem Messgeber

3. Königszapfenanordnung nach einem der vorhergehenden Ansprüche,
**dadurch gekennzeichnet,**
**dass** der Messgeber ein Messbalken und/oder dass der Messgeber mit dem Königszapfenteller verbunden ist.

4. Königszapfenanordnung nach einem der vorhergehenden Ansprüche,
**dadurch gekennzeichnet,**
**dass** die Messeinheit in einer Ausnehmung der Komponente angeordnet ist.

5. Königszapfenanordnung nach einem der vorhergehenden Ansprüche,
**dadurch gekennzeichnet,**
**dass** die Messeinheit auf der Oberseite des Flanschabschnitts angeordnet und eine Abdeckung für die Messeinheit vorgesehen ist.

6. Königszapfenanordnung nach einem der vorhergehenden Ansprüche,
**dadurch gekennzeichnet,**
**dass** eine Auswerteeinrichtung vorgesehen, an welche die Messeinheit angeschlossen ist, wobei die Auswerteeinrichtung bevorzugt unter der Abdeckung angeordnet oder Teil der Abdeckung ist.

7. Königszapfenanordnung nach einem der vorhergehenden Ansprüche,
**dadurch gekennzeichnet,**
**dass** die Messeinheit mit einer Spannungsquelle verbunden ist und/oder einen elektrischen Widerstand und zwei elektrische Anschlüsse aufweist und bevorzugt ein Dehnungsmessstreifen oder ein Piezoelement ist.

8. Königszapfenanordnung nach einem der vorhergehenden Ansprüche,
**dadurch gekennzeichnet,**
**dass** die Komponente eine Kabelführung aufweist, die bevorzugt eine Nut und/oder eine Bohrung umfasst.

9. Königszapfenanordnung nach einem der vorhergehenden Ansprüche,
**dadurch gekennzeichnet,**
**dass** wenigstens drei gleichartig angeordnete Messeinheiten vorgesehen sind, die bevorzugt gleichmäßig verteilt angeordnet sind.

10. Königszapfenanordnung nach einem der vorhergehenden Ansprüche,
**dadurch gekennzeichnet,**
**dass** mehrere Messeinheiten eine Messgruppe bilden, die bevorzugt an die Auswerteeinrichtung angeschlossen ist, und
**dass** die Messeinheiten innerhalb ihrer Messgruppe zu einer Brückenschaltung miteinander verbunden sind, bevorzugt zu einer Wheatstonesche Vollbrücke.

11. Königszapfenanordnung nach einem der vorhergehenden Ansprüche,
**dadurch gekennzeichnet,**
**dass** die Messgruppe eine Verformung des Königszapfens um eine Längsachse oder um eine Querachse erfasst, wobei die Messeinheiten einer Messgruppe bevorzugt spiegelsymmetrisch zu einer Längsebene und/oder einer Querebene und/oder rotationssymmetrisch um eine Zentralachse des Königszapfens angeordnet sind.

12. Königszapfenanordnung nach einem der vorhergehenden Ansprüche,
**dadurch gekennzeichnet,**
**dass** mehrere Messgruppen vorgesehen sind, die zur Erfassung unterschiedlicher Verformungen oder der Verformung unterschiedlicher Komponenten ausgebildet sind, wobei bevorzugt alle Messgruppen mit der gleichen Auswerteeinrichtung verbunden sind.

13. Sattelauflieger mit einer Königszapfenanordnung gemäß einem der vorhergehenden Ansprüche.

14. Königszapfen, insbesondere zur Verwendung in einer Königszapfenanordnung nach einem der Ansprüche 1 bis 12,
**dadurch gekennzeichnet,**
**dass** in oder an dem Königszapfen eine Messeinheit vorgesehen ist, die eingerichtet ist, eine Verformung des Königszapfens als elektrische Messgröße abzubilden.

15. Verfahren zum Erfassen eines Fahrzustands eines Sattelaufliegers gelöst mittels einer Königszapfenanordnung gemäß den Ansprüchen 1 bis 12,
**dadurch gekennzeichnet,**
**dass** die elektrische Messgröße, insbesondere der Widerstand, der Messeinheit von der Auswerteeinrichtung erfasst und daraus wird die Verformung der zugehörigen Komponente ermittelt wird, wobei bevorzugt eine Neukalibrierung erfolgt, indem ein Signal erzeugt wird, wenn sich der Sattelauflieger in einem abgekuppelten Zustand befindet, das Signal an die Auswerteeinrichtung übermittelt wird und die Auswerteeinrichtung dann den aktuellen Wert der Messgröße der Messeinheit als neutralen Wert festsetzt.
